(19) **Europäisches Patentamt / European Patent Office / Office européen des brevets**

(11) **EP 4 191 930 A1**

(12) **EUROPEAN PATENT APPLICATION**
published in accordance with Art. 153(4) EPC

(43) Date of publication:
**07.06.2023 Bulletin 2023/23**

(21) Application number: **21880627.1**

(22) Date of filing: **18.10.2021**

(51) International Patent Classification (IPC):
**H04L 5/00** (2006.01)   **H04L 1/00** (2006.01)
**H04W 72/12** (2023.01)   **H04W 72/04** (2023.01)

(52) Cooperative Patent Classification (CPC):
**H04L 1/00; H04L 5/00; H04W 72/04; H04W 72/12**

(86) International application number:
**PCT/KR2021/014427**

(87) International publication number:
**WO 2022/080981 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020 KR 20200134413**

(71) Applicant: **LG Electronics Inc.**
**Yeongdeungpo-gu**
**Seoul, 07336 (KR)**

(72) Inventors:
• **HWANG, Seunggye**
**Seoul 06772 (KR)**
• **AHN, Joonkui**
**Seoul 06772 (KR)**
• **KIM, Jaehyung**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR TRANSMITTING AND RECEIVING WIRELESS SIGNAL IN WIRELESS COMMUNICATION SYSTEM**

(57) A user equipment according to an embodiment of the present disclosure may report capability of the user equipment related to physical downlink control channel (PDCCH) reception, receive a PDCCH carrying DCI (downlink control channel), and obtain a plurality of bits included in the DCI by decoding the DCI, and with respect to the decoding of the DCI, the user equipment may obtain the plurality of bits included in the DCI by assuming that some of the plurality of bits included in the DCI are encoded in a fixed value, on the basis of the reported capability of the user equipment.

**FIG. 12**

EP 4 191 930 A1

**Description**

[Technical Field]

The present disclosure relates to a wireless communication system, and more particularly, to a method and apparatus for transmitting and receiving a wireless signal.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

According to an aspect of the present disclosure, a method of receiving a signal by a user equipment (UE) in a wireless communication system includes reporting capability of the UE related to reception of a physical downlink control channel (PDCCH), receiving a PDCCH carrying a downlink control channel (DCI), and decoding the DCI to acquire a plurality of bits included in the DCI. In the decoding of the DCI, the UE assumes that a part of the plurality of bits included in the DCI are encoded to a fixed value based on the reported capability of the UE, and acquires the plurality of bits included in the DCI.

The part of the bits encoded to the fixed value may be determined based on the capability of the UE.

The decoding of the DCI may be performed based on a polar code. The part of the bits assumed to be encoded to the fixed value may be frozen bits in a polar code.

The reported capability of the UE may be related to DCI bit freezing.

The UE may assume that 'M' bits of total 'K' bits included in a specific field of the DCI are encoded to a fixed value and may perform decoding on 'K-M' bits, and 'K' may refer to a size of the specific field, and 'M' may be an integer greater than 0 and equal to or less than 'K' and may be determined based on the reported capability of the UE

The specific field may include at least one of a frequency domain resource allocation (FDRA) field, a time domain resource allocation (TDRA) field, a redundancy version (RV) field, or a virtual resource block (VRB)-to- physical resource block (PRB) field.

In a case of the FDRA field, a binary value of the 'M' bits is determined based on a maximum physical resource block (PRB) to be scheduled.

According to another aspect of the present disclosure, a processor-readable recording medium having recorded thereon a program for executing the method may be provided.

According to another aspect of the present disclosure, a device for performing the method of receiving a signal may be provided. The device may be an application specific integrated circuit (ASIC) or a digital signal processing device. The device may be a user equipment (UE) operating in a wireless communication system based on a 3rd generation partnership project (3GPP).

According to another aspect of the present disclosure, a method of transmitting a signal by a base station (BS) in a wireless communication system includes receiving a report of capability of the UE related to reception of a physical downlink control channel (PDCCH) from a user equipment (UE), encoding a downlink control channel (DCI) including a plurality of bits, and transmitting a PDCCH carrying the DCI. The BS encodes the DCI in a state in which at least part of the plurality of bits included in the DCI are configured to fixed bit values based on the report of the capability of the UE.

According to another aspect of the present disclosure, a device for performing the method of receiving a signal may be provided.

[Advantageous Effects]

According to an embodiment of the present disclosure, a frozen bit of a downlink signal may be determined based on capability of a UE, and thus a downlink signal may be transmitted and received adaptively and efficiently to the capability of the UE.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink control channel (PDCCH) transmission and reception process.
FIG. 6 illustrates an exemplary physical downlink shared channel (PDSCH) reception and acknowledgement/negative acknowledgement (ACK/NACK) transmission process.
FIG. 7 illustrates an exemplary physical uplink shared channel (PUSCH) transmission process.
FIG. 8 illustrates an LTE-based wake-up signal.
FIG. 9 is a diagram for explaining a polar code-based channel coding.
FIG. 10 is a flowchart showing an operation of a base station (BS) to which a method proposed in the present disclosure is applicable.
FIG. 11 is a flowchart showing an operation of a device (e.g., UE) to which a method proposed in the present disclosure is applicable.
FIG. 12 is a flowchart showing a method of transmitting and receiving a signal according to an embodiment of the present disclosure.
FIG. 13 to FIG. 16 illustrate an example of a communication system 1 and wireless devices applicable to the present disclosure.
FIG. 17 illustrates an exemplary discontinuous reception (DRX) operation applicable to the present disclosure.

[Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- TS 36.211: Physical channels and modulation
- TS 36.212: Multiplexing and channel coding
- TS 36.213: Physical layer procedures
- TS 36.300: Overall description
- TS 36.321: Medium Access Control (MAC)
- TS 36.331: Radio Resource Control (RRC)

3GPP NR

- TS 38.211: Physical channels and modulation
- TS 38.212: Multiplexing and channel coding
- TS 38.213: Physical layer procedures for control
- TS 38.214: Physical layer procedures for data
- TS 38.300: NR and NG-RAN Overall Description
- TS 38.321: Medium Access Control (MAC)
- TS 38.331: Radio Resource Control (RRC) protocol specification
- TS 37.213: Introduction of channel access procedures to unlicensed spectrum for NR-based access

Terms and Abbreviations

- PSS: Primary Synchronization Signal
- SSS: Secondary Synchronization Signal
- CRS: Cell reference signal
- CSI-RS: Channel State Information Reference Signal
- TRS: Tracking Reference Signal
- SS: Search Space
- CSS: Common Search Space
- USS: UE-specific Search Space
- PDCCH: Physical Downlink Control Channel; The PDCCH is used to represent PDCCHs of various structures which may be used for the same purpose in the following description.
- DCI: Downlink Control Information
- WUS: Wake Up Signal; The WUS may be used to represent other method signals or channels (e.g., a paging early indication (PEI)), which perform a similar function.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

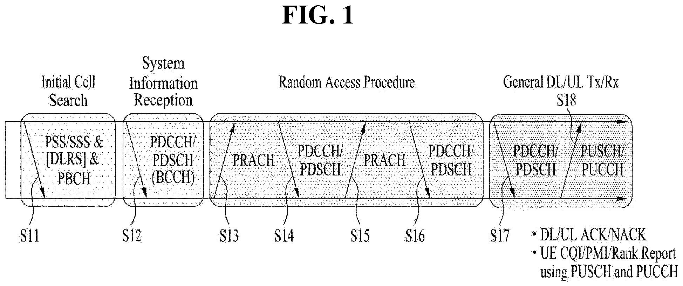

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

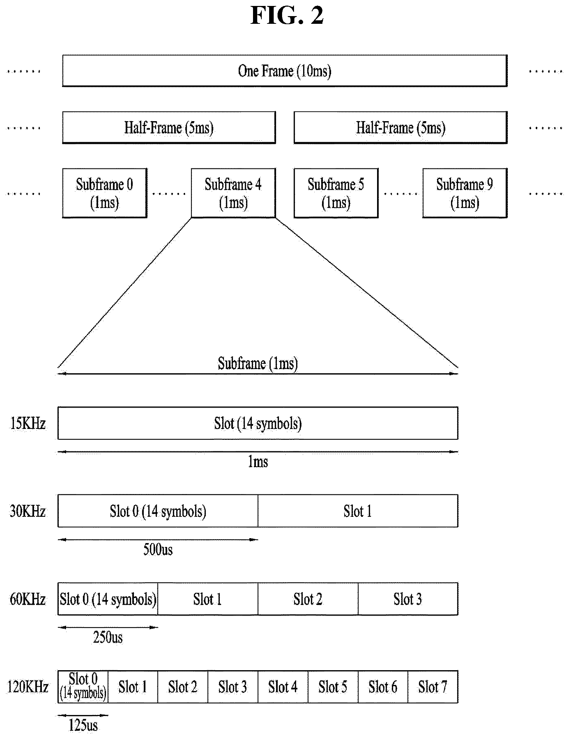

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

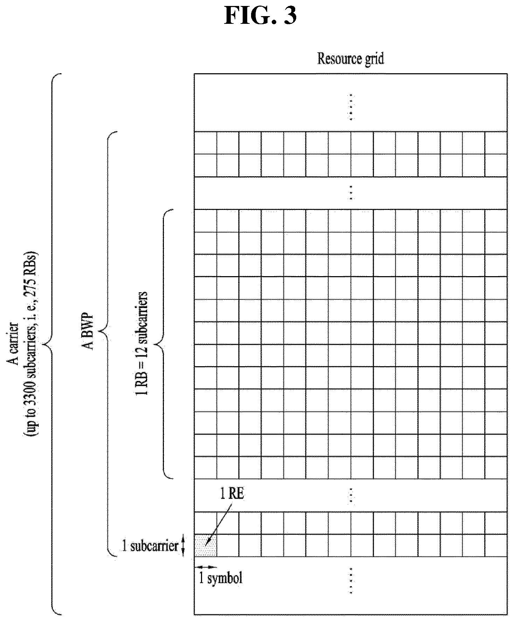

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

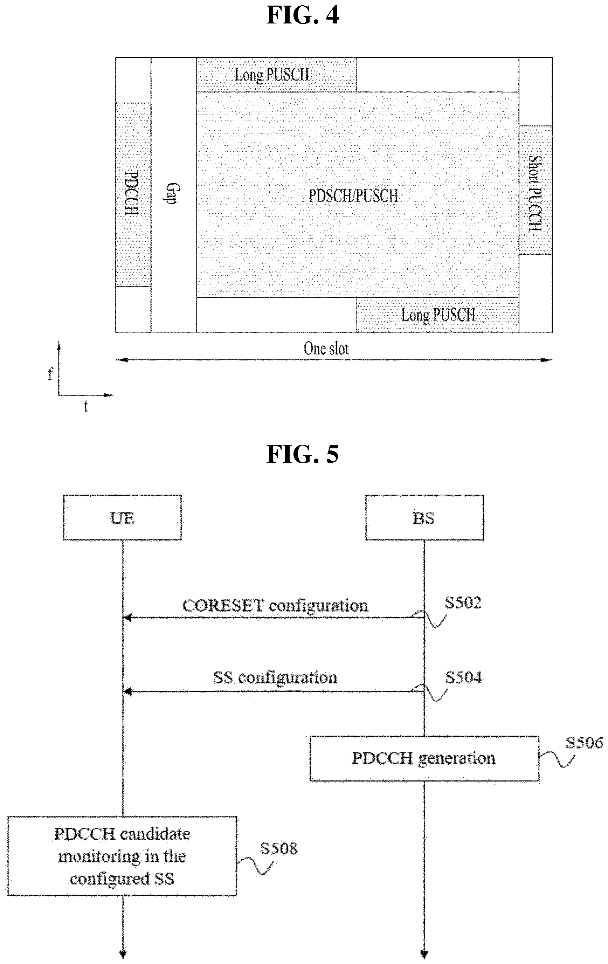

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB 1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

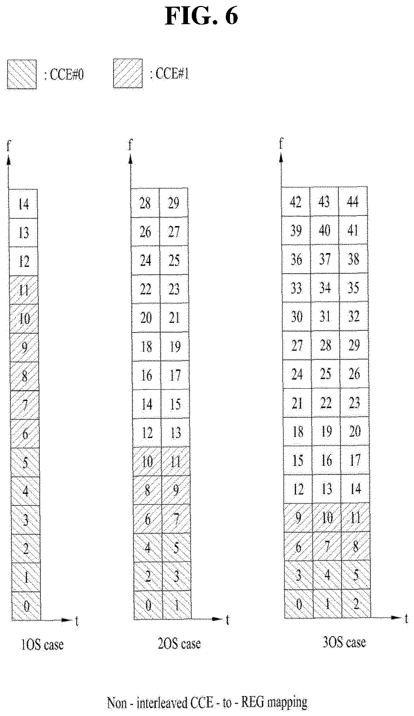

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH. As described above, a row index of pdsch-TimeDomainAllocationList provided UE-commonly or UE-specifically may be indicated by a TDRA field.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

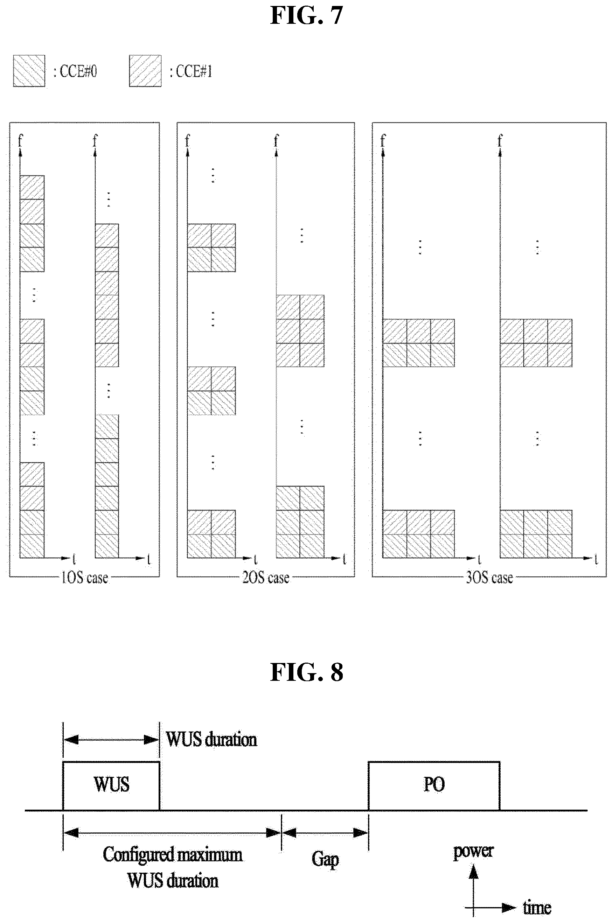

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC _INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each PO signaled by system information, for an SI change indication and a PWS notification. In bandwidth adaptation (BA), the RRC _CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC _INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC _INACTIVE state, the UE transitions to the RRC_IDL state and notifies the NAS of the CN-initiated paging.

APF and a PO for paging are determined in the following manner:

- An SFN for the PF is determined by:

$$(SFN + PF\_offset) \bmod T = (T \text{ div } N)*(UE\_ID \bmod N)$$

- An index i_s indicating the index of the PO is determined by:

$$i\_s = floor(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

### WUS (Wake-up signal)/PEI (Paging Early Indication)

In LTE Rel-15 NB-IoT and MTC, a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE. FIG. 8 is a diagram illustrating a WUS in an LTE system. Referring to FIG. 8, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

Even in a communication system such as NR, whether the UE needs to perform monitoring of a paging DCI in a PO or whether the UE provides a paging DCI may be indicated through a PEI (e.g., sequence or DCI-based Paging Early Indication). When the UE succeeds in detection of the PEI, the UE may monitor the paging DCI (and/or a PDSCH carrying the corresponding paging message). When the PEI is not detected, the UE may skip monitoring of the paging DCI in the corresponding PO.

### Polar Coding

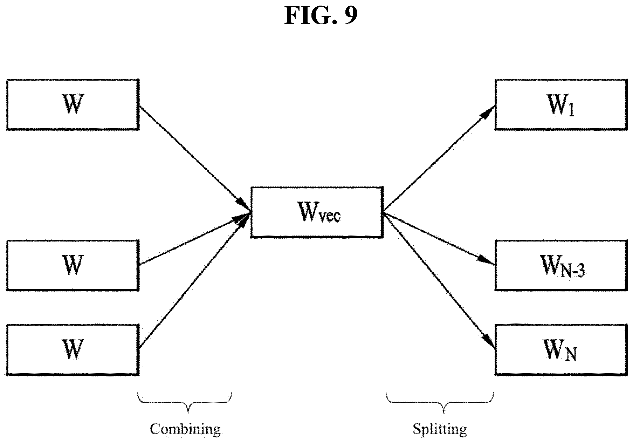

FIG. 9 is a diagram for explaining Polar Coding.

Referring to FIG. 9, Polar Code-based Encoding may be divided into a channel combining process and a channel splitting process. A vector channel $W_{vec}$ is created through combining channels W, and polarized channels W1, ..., WN are created through splitting of the vector channel $W_{vec}$. Theoretically, channel capacity may be expressed as 0 or 1 for a channel of an infinite length. Channel capacity 1 may be used for transmission of an information bit. Bits allocated in relation to channel capacity 0 in which information bit transmission is impossible are referred to as frozen bits. For example, a frozen bit has a similar aspect to a dummy bit that does not actually carry information. Since the location and size of frozen bits are related to the capability of polar coding and the coding rate (of information bits), allocation of frozen bits is an important factor to consider.

Polar Code-based Decoding may be performed, for example, based on Successive Cancellation (SC), and in this case, a receiver may calculate a LLR (Likelihood Ratio) based on a channel transition probability. In relation to the fact that a channel combining process and a channel splitting process are recursively performed during encoding, channel transition probability calculation and LLR calculation may also be performed recursively during decoding.

### DCI bit Freezing

As described above, in a communication system such as LTE and NR, DCI may be used for the purpose of dynamically providing control information from a BS to a UE. DCI may be divided into various formats depending on the purpose. In NR, DCI format 0_x (i.e. x =0, 1, or 2) series for scheduling PUSCH transmission (i.e. UL Grant DCI), DCI format 1_y (i.e. y =0, 1, or 2) series for scheduling PDSCH transmission (i.e., DL Grant DCI), and DCI format 2_z (i.e. z = 0, 1, 5, or 6) series to support other purposes are defined. DCI may be transmitted on a search space (SS) through a PDCCH as a physical layer channel, and a UE may acquire DCI information by monitoring the SS and decoding a PDCCH according to a predefined rule. In general, as the amount of information provided to the UE by DCI increases, a DCI size increases, and a code rate of a PDCCH including the DCI increases. Increasing the code rate of the PDCCH may cause an effect of degrading PDCCH decoding reliability of the UE or reducing coverage of a supportable UE. Thus, the size of the DCI format needs to be determined by considering coverage supported by the BS and the decoding reliability of the UE.

Currently, in 3GPP, discussions related to coverage are underway in various items with Rel-17 NR as a target. In particular, in the NR REDCAP (REDuced CAPability) item that mainly targets low complexity and the CE (Coverage Enhancement) item to support wider coverage, various discussions are being conducted to compensate for coverage loss caused by complexity reduction of the UE or satisfy target coverage. For most of various channels, there are coverage-related technologies introduced in the Rel-15 and Rel-16 standards, and various methods based thereon may be considered. However, in the case of a DL control channel through which DCI is transmitted, since schemes such as repetition previously defined in other channels are not defined, it is necessary to introduce a new scheme for increasing coverage.

For example, the present disclosure proposes methods for overcoming the coverage-related problem of a common DL control channel having the characteristics of multicast/broadcast/UE-group-common signaling that needs to be commonly provided to a plurality of UEs.

A Common Search Space (CSS) to be used in a paging, a RACH process, or the like, is designed to be monitored by a plurality of UEs at the same time. Therefore, regardless of an individual coverage state or capability of each of UE that expects/monitors reception of the same PDCCH in the same CSS, all corresponding UEs need to be supported to receive the PDCCH. When a new technology is introduced in the CSS, a backward compatibility issue for satisfying UE common reception possibility may be particularly important. If PDCCH coverage-related technologies defined in Rel-17 NR REDCAP and CE do not satisfy backward compatibility, each DL/LTL resource overhead to support all UEs with different capabilities may occur (e.g., a problem of low resource efficiency when a separate dedicated resource area is allocated for a new UE), and when UEs share the same BWP or SS, a blocking (overlapping/collision) issue may occur therebetween (e.g., Collision occurs at a time of common multiple of different SSs according to a period). Therefore, in order to improve or compensate for coverage of a PDCCH to be transmitted to an SS that needs to be simultaneously monitored by a plurality of terminals regardless of a specific condition, such as a CSS, technology for ensuring backward compatibility needs to be considered.

According to an embodiment of the present disclosure, a DCI design/transmission scheme for compensating or improving PDCCH transmission/reception coverage is proposed. The proposed methods have an advantage that the existing UEs (i.e., a UE to which the proposed methods are not applied) are capable of continuing to perform the same operation as the existing operation even when used on a CSS designed to monitor the above plurality of UEs at the same time and may also have an advantage that additional network overhead is not generated. Although the following description assumes transmission in a CSS, those skilled in the a rt may understand that the present disclosure is not limited thereto and may be extended to UE-specific SS (USS).

As an example of applying the methods proposed in the present disclosure, a method in which a UE utilizes a specific DCI transmitted on a CSS in a communication system such as LTE and NR may be considered. However, the proposed methods are not limited to this example, and unless the spirit of the present disclosure is violated, the proposed method may be generally applied to a DCI that is expected to be transmitted and received on different types of SSs.

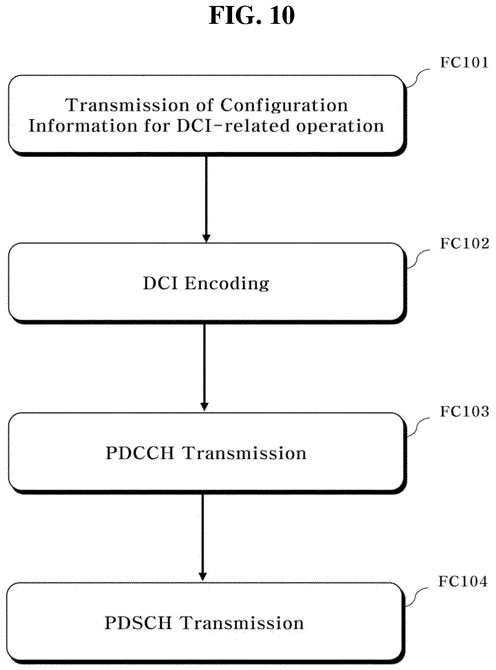

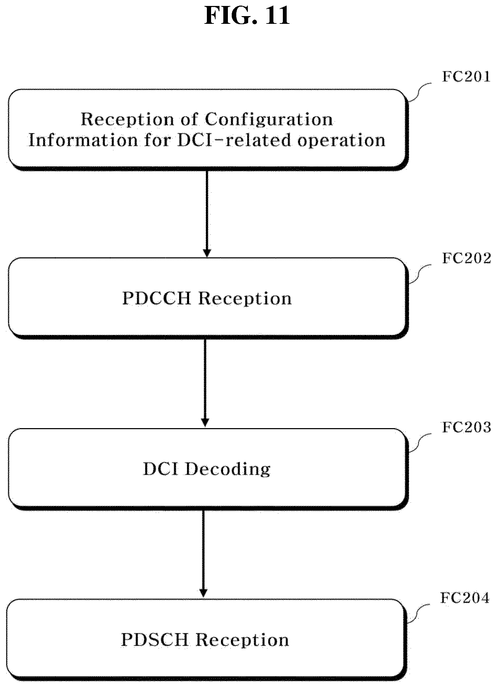

FIGS. 10 and 11 are flowcharts showing respective examples of an operation of a BS and an operation of a UE to which the method proposed in the present disclosure is applied.

Referring to FIG. 10, the BS may generate and transmit configuration information related to a DCI/PDCCH in order to support a structure of a DCI that is newly proposed (FC101). For example, the configuration information may be transmitted using a higher layer signal (e.g., SIB or RRC signaling).

The BS may encode the DCI based on the configuration information (FC102).

The BS may generate a PDCCH including the encoded DCI and may transmit the PDCCH based on the configuration information (FC103).

The BS may perform transmission of the PDSCH based on scheduling information of the PDSCH transmitted through the DCI (FC104). If when the PDSCH is not scheduled by the DCI, the corresponding operation may be omitted. If another channel (e.g., PUSCH) is scheduled by the DCI, the corresponding operation may be replaced with transmission of another channel. For example, a PUSCH operation of the UE based on the a UL grant DCI may also be performed.

Referring to FIG. 11, the UE may receive configuration information related to a DCI in order to a structure of the proposed DCI (FC201). For example, the configuration information may be transmitted using a higher layer signal (e.g., SIB or RRC signaling).

The UE may monitor the PDCCH based on the configuration information, and when the BS transmits the PDCCH, the UE may receive the PDCCH (FC202).

The UE may acquire a DCI through the received PDCCH and may decode the DCI based on the configuration information (FC203).

If the UE succeeds in DCI decoding, the UE may receive a PDSCH scheduled by the DCI (FC204). If the UE fails in DCI decoding, the UE may determine that there is no scheduled information therefor, and in this case, the PDSCH reception operation may be omitted. If a channel (e.g., PUSCH) other than a PDSCH is scheduled by the DCI, the operation of receiving the PDSCH by the UE may be replaced with transmission and reception of another channel. For example, the operation of transmitting the PUSCH of the UE based on a UL grant DCI may be performed.

Each of the methods proposed below may be operated in an independent form without a separate combination, or one or more methods may be combined and operated in a linked form. Some terms, symbols, and orders used for the description of the present disclosure may be replaced with other terms, symbols, and orders as long as the principles of the present disclosure are maintained.

Hereinafter, in the present disclosure, the structure of the DCI scheduling a PDSCH is shown as an example to explain the principle of the disclosure, but the proposed methods do not specify and limit a mode in which a UE operates or a type of the DCI unless otherwise described. Therefore, it is obvious that the methods proposed in the present disclosure are applied to all transmission/reception modes and types of a DCI of UEs unless otherwise described, unless the principles of the present disclosure are infringed.

Hereinafter, in the present disclosure, an example is shown based on an NR system to explain the principle of the present disclosure, but the proposed methods do not specify and limit the transmission and reception form of NR unless otherwise described. Therefore, it is obvious that the methods proposed in the present disclosure are applied to all transmission/reception structures unless otherwise described, unless the principles of the present disclosure are infringed.

For convenience, a DCI field(s) to which freezing(fixing) is applied is referred to as a DCI_Field-A and a DCI in which the DCI_Field-A is to be included is referred to as a DCI-A. A UE that expects reception of the DCI-A is referred to as a UE-A. For example, the DCI_Field-A may be related to a reserved bit of a DCI, at least some of the existing fields of the DCI field are reconfigured into the DCI_Field-A, or a combination of multiple fields (at least some) of DCI constitutes the DCI_Field-A, but the present disclosure is not limited thereto.

Hereinafter, a method of freezing, and transmitting and receiving some bit(s) of a DCI is proposed. Freezing refers to a state in which a target bit(s) has a pre-promised fixed value. The UE-A may perform decoding assuming that bits to which freezing is applied are encoded with a pre-promised fixed value. When a BS intends to transmit the DCI-A to UE-A, the BS may encode bits to which freezing is applied by mapping the bits to fixed values promised in advance.

For example, he UE-A may determine only state 0/1 for the remaining bits except for bits to which freezing is applied. Since transmission/reception/decoding errors do not occur for bits to which freezing fixed to a predefined value is applied, the transmission/reception/decoding success probability of an entire DCI may be improved. In addition, a gain of channel coding (e.g., Polar Coding) may be obtained for the remaining bits to which freezing is not applied. For example, since a codeword distance between information bits increases, decoding errors may be reduced. As such, since the robustness of the DCI is improved through freezing, coverage of the PDCCH carrying the DCI may be expanded. Alternatively, if freezing is applied, even if the DCI is transmitted through a smaller number of CCEs (i.e., lower AL), the same PDCCH coverage level as when freezing is not applied is satisfied, and thus a DCI bit freezing scheme may have an advantage of improving resource efficiency. In addition, since the DCI is capable of being transmitted through fewer resources, collision/blocking between PDCCH candidates (e.g., overlap between PDCCH candidates belonging to different SSs) may be reduced.

As a specific example, assuming that, among the DCI fields included in the DCI-A, the size of the DCI_field-A is N bits and the size of a bit to which freezing is applied is M bit, the UE-A may be assumed to express M bits of the field of N bits included in the DCI-A as a fixed value. Alternatively, in order to acquire the same effect, the UE-A may expect only reception of an index of a size of $2^{N-M}$ among indexes of a size of $2^N$ specifying information of the DCI_field-A, and the remaining indexes may also be determined not to expect $2^N$-$2^{N-M}$ indexes. When the BS intends to provide control information to the UE-A using the DCI-A, the BS may always configure M bits among N-bit fields to a fixed value and schedule an operation designated by the DCI-A accordingly. For example, it may be understood that only the remaining of the N-bit fields except M bits carry actual state information. For example, assuming a 3-bit specific field B2B 1B0, up to 8 states may be indicated according to a combination of B2B 1B0 values, but B2 may be fixed to X and up to 4 states may be indicated through (X)B1B0. The UE may not expect reception of the corresponding B2, and may assume that state information is supposed to be obtained even if only B1B0 is decoded without performing decoding. Alternatively, with the same effect, the BS may assume that only an index of a size of $2^{N-M}$ among indexes of a size of $2^N$ specifying information of the DCI_field-A is to be used for the UE-A and may schedule an operation designated by the DCI-A accordingly.

According to this method, there is an advantage in not having to define a separate DCI format for a UE receiving the DCI-A. As the number of DCI formats to be monitored by the UE increases, a burden of blind detection on the UE increases, and especially in the case of UEs with low capability, there is a problem in that decoding takes a lot of time. However, according to the above example, the DCI-A may not cause such a problem.

Whether to apply DCI Bit Freezing may be determined by the state in which the UE satisfies a specific reference. A detailed state may use one or more of the following methods, and if the UE does not satisfy a condition, DCI (non DCI-A) in state in which DCI Bit Freezing is not applied may be expected.

In detail, whether to apply DCI Bit Freezing may be determined according to the capability of the UE. For example, a network/BS may apply DCI Bit Freezing only when there is capability (hereinafter cap-A) with which the UE is capable of applying DCI Bit Freezing, and otherwise, the network/BS may not apply DCI Bit Freezing. In this case, the UE-A may report the cap-A to the BS (or a higher node) at least once before applying DCI Bit Freezing. The BS may apply DCI Bit Freezing only when determining that the corresponding UE has the cap-A through the UE Capability report. If the UE does not have the Cap-A or does not receive an explicit report that there is the Cap-A, the BS may not apply DCI Bit Freezing.

Alternatively, whether to apply DCI bit Freezing may be determined by coverage/channel state (CSI)/channel measurement of the UE. For example, the UE-A may estimate a coverage state thereof based on measurement of RSRP, etc. If the measurement result is equal to or less than a specific threshold (hereinafter thr-A) (when it is determined that a CE is required), the UE-A may assume that DCI Bit Freezing is applied. The UE-A may report a coverage state thereof based on the thr-A (e.g., whether the measurement result exceeds THR-A) to the BS. In particular, determination of whether to apply DCI bit Freezing based on coverage may be suitable when the UE has no mobility or low mobility.

The BS may inform UEs of DCI Bit Freezing-related information (hereinafter, information-A). The UE-A may receive information-A transmitted by the BS and perform an operation related to DCI bit freezing based on the information-A. The information-A may include at least one of whether to apply DCI bit freezing, a DCI format and RNTI to which DCI bit freezing is applied, DCI field(s) to which DCI bit freezing is applied within the DCI-A, and/or a specific type of the DCI_field-A. If the UE receives the information-A indicating that DCI bit freezing is applied to a specific DCI, the UE may expect reception of the DCI-A in an SS in which monitoring of the specific DCI is performed. If the information-A received by the UE indicates that freezing is not applied to a specific DCI, the UE may expect to receive DCI to which DCI bit freezing is not applied. In addition, if the UE does not receive the information-A, the UE may assume that freezing is not applied and perform a DCI reception operation.

In detail, the BS may provide the information-A to UEs through a higher layer signal such as a SIB. For example, the UE-A may expect reception of the DCI-A only when support of DCI Bit Freezing is confirmed through the SIB in which the information-A is to be included.

Alternatively, the BS (or a higher node) may inform a specific UE about whether the DCI-A is supported using dedicated signaling. For example, when the UE reports state information thereof (e.g., capability and/or coverage) for applying DCI Bit Freezing, and in response to this, the BS (or a higher node) may indicate whether the DCI-A is supported to a specific UE using dedicated signaling. After reporting the state information, the UE may expect to receive the DCI-A only when acquiring the information-A in response.

If an application unit of some (or all) information-A is an area based on a plurality of cells (hereinafter, Area-A), the UE may expect that information-A is maintained in (at least) the Area-A. Even after the UE acquires the information-A from a specific cell and moves to another cell within the Area-A, the UE may expect that DCI Bit Freezing is supposed to continue to be applied based on the same information-A without obtaining a separate report or the information-A. For example, the Area-A may be a tracing area (TA). The information-A may be information that makes the BS (or a higher node) check the capability of the UE and indicates that application of DCI bit Freezing is allowed.

In another example, the SS configuration may include information indicating whether the UE needs to monitor a specific DCI format on the corresponding SS. The SS configuration may further include information indicating whether to enable/disable use of the specific DCI format as the DCI-A.

The proposed method may obtain an advantageous effect when a plurality of UEs transmit DCI on an SS to be commonly monitored. For example, in the case of a DCI transmitted on an SS that provides cell-common control information such as a CSS, backward compatibility to support an existing UE needs to be ensured. In the case of DCI Bit Freezing, since the payload size of the existing DCI and the form of the DCI fields are to be maintained as it is, the existing UEs and the UEs-A may acquire the same information. At the same time, in the case of the UE-A, since the UE-A knows a value expressed by some bits in advance and processes the value as known bit information, the UE-A may obtain a gain for relatively improving the decoding reliability.

Proposals in Proposal 1 to 4 explained below may be specific examples to which DCI bit freezing is applied. According to proposals of freezing below, some scheduling flexibility may also be limited, but there is an advantage in that an effective code rate of the PDCCH is lowered. In Proposals 1 to 4, operations and examples are described based on the structure of DCI format 1_0, but Proposals 1 to 4 may also be used in other DL grant/UL grant DCI formats.

(Proposal 1) Freezing of at least some bits of FDRA

Proposal 1 proposes a method of freezing at least some bits of a Frequency Domain Resource Assignment (FDRA) field.

As a detailed example, Proposal 1 may be a method of freezing M bits of a FDRA field with a size of Ceiling$[\log_2(N_{RB}^{DL,BWP} (N_{RB}^{DL,BWP}+1)/2)]$ bits included in DCI format 1_0. In this case, $N_{RB}^{DL,BWP}$ refers to the number of RBs of a DL BWP, in the case of DCI format 1_0 in which CRC is scrambled with P-RNTI, SI-RNTI, RA-RNTI, MsgB-RNTI, or TC-RNTI, $N_{RB}^{DL,BWP}$ may have the same size of CORESET 0, and in the case of DCI format 1_0 in which CRS is scrambled with RA-RNTI or MsgB-RNTI in a BWP in which CORESET 0 is not configured, the $N_{RB}^{DL,BWP}$ may be determined as a size of the initial DL BWP. The size and position of M bits to which freezing is applied may be values determined according to the standard or may also be a value designed through higher layer signaling such as a SIB.

As a detailed example, a value to which M bits are fixed, to which freezing is applied in an FDRA field may be determined based on a PRB with the maximum length to be scheduled using the FDRA field. This is to ensure the maximum size of the PRB to be scheduled. For example, when the size of the DL BWP is 24 PRBs, the maximum length of the PRB to be scheduled using a FDRA field including 9 bits of DCI format 1_0 may be 24 PRBs. When 24 PRBs are scheduled, the FDRA field may be represented by '000101111' (MSB-to-LSB order). When LSB 3-bit is designated with target bits of freezing, the UE may assume that LSB 3-bit of the FDRA field is frozen with '111' and may perform decoding of the corresponding DCI (e.g., decoding [B8~B3] + freezing LBS 3bit [111]). If MSB 4 bit is a freezing target, the UE may expect that MSB 4 bit of the FDRA field is expressed by '0001' and may perform decoding of the corresponding DCI. Similarly, when the size of the DL BWP is 48 PRBs, a state/value of a freezing bit may be determined based on the case in which a PDSCH of a length of 48 PRBs is scheduled (i.e., when the FDRA field is expressed as '00001011110'), and when the size of the DL BWP is 96 PRBs, the state/value of the freezing bit may be determined based on the case in which a PDSCH of a length of 96 PRBs is scheduled (i.e. when the FDRA field is expressed as '0000010111110').

If a CRC is scrambled with a C-RNTI and Proposal 1 is applied to a DCI for a PDCCH order (e.g., DCI format 1_0 for initiating the Random access procedure), the UE may expect that M bits to which freezing is applied in the FDRA field are fixed to 1. This is a condition for interpreting DCI format 1_0 for initiating a PDCCH order based on the current Rel-16 NR standard in consideration of the case in which a condition in which all FDRA fields have 1 is used, and may have the purpose of supporting an operation of a UE supporting Proposal 1.

If the UE to which Proposal 1 is applied intends to simultaneously support scheduling of a PDSCH and a PDCCH order-related operation using a PRB of a size of a DL BWP, a bit to which freezing is applied in the FDRA field may be defined/configured to use only a position having a value of 1 in Expression of a bit indicating a PRB with the maximum length to be scheduled using the FDRA field. For example, when the size of the DL BWP is 24 PRBs, a bit of a bit for scheduling 24 PRBs may be represented by '000101111', and in this case, 4, 6, 7, 8 and/or 9th bits may be defined/configured to be used as a bit for freezing based on a MSB.

In an example to which Proposal 1 is applied, a bit as a freezing target may include LSB M1 bits. This may have an effect of partially limiting the position of a starting VRB of a PDSCH scheduled by the FDRA field. To this end, the size of M1 may be limited to satisfy a condition of mod($N_{RB}^{DL,BWP}$, $2^{M1}$)=0. For example, when the size of a DL BWP is 24 PRBs, an LSB of the maximum 3 bits may be designated as a freezing target. A method of limiting the position of the starting VRB may have an advantage that a data rate of a scheduled PDSCH is not limited due to application of Proposal 1, that is, an advantage that it is possible to provide the same flexibility as a data rate of a UE to which Proposal 1 is not applied.

In an example to which Proposal 1 is applied, MSB M2 bits may be defined/configured to be included in a bit as a freezing target. For example, a method of freezing MSB 1 bit may have an advantage of minimizing influence on the scheduling flexibility of the existing FDRA field. Based on the current Rel-16 NR standard, in the FDRA field of DCI format 1_0, only some of the states in which the MSB 1 bit corresponds to 1 are used, and most of the states remain in a reserved state. For example, when the size of a DL BWP is 24 PRBs, a value of an RIV expressed by the FDRA field may use only a range of 0 to 311, and thereamong, when the MSB 1 bit is 1, only 40 cases may be present. Considering that, when bits other than MSB 1 bit are freezing targets, degradation of scheduling flexibility generally occurs by about 1/2, a method of freezing MSB 1 bit is advantageous in reducing influence on scheduling flexibility. Considering this, when the MSB 1 bit is frozen, the UE may decode the DCI assuming that the MSB 1 bit = 0.

Information acquired by the UE to which Proposal 1 is applied from the FDRA field may be the same as that of a UE to which Proposal 1 is not applied. For example, the UE to which Proposal 1 is applied may reconfigure an entire FDRA field including a frozen bit and may interpret the entire FDRA field based on an FDRA table used by UEs to which Proposal 1 is not applied. In this case, even when a plurality of UEs monitoring the same DCI have different capabilities (i.e., when a UE to which Proposal 1 is applied and a UE to which Proposal 1 is not applied monitor the same DCI), the UEs may advantageously schedule a PDSCH on the same frequency domain.

(Proposal 2) Freezing of at least some bits of TDRA field

Proposal 2 proposes a method of freezing at least some bits of a Frequency Domain Resource Assignment (TDRA) field. Proposal in Proposal 2 may also be used with at least one of Proposal 1, 3, or 4.

As a detailed example, Proposal 2 may be a method of freezing M bits of a TDRA field with a size of 4-bit included in DCI format 1_0. In this case, the size and position of M bits to which freezing is applied may be values determined according to the standard or may also be a value designed through higher layer signaling such as a SIB.

As a detailed method, when pdsch-TimeDomainAllocationList information is included in pdsch-ConfigCommon as an IE provided by a SIB and Proposal 2 is applied on a SS in which the information is to be applied, M MSB bits may be defined/configured to be included in a bit as a freezing target. For example, when MSB 2 bit is frozen to 0,the UE may assume that only first to fourth entries are used in ascending order among entries included in pdsch-TimeDomain-AllocationList. Information of a TDRA to be provided through pdsch-TimeDomainAllocationList may be configured by a BS. Thus, the BS may first assign a low index to $2^M$ TDRA Configuration Entities required for the UE to which Proposal 2 is applied, and may configure the remaining $4-2^M$ entries with a TDRA value for general UEs to which Proposal 2 is not applied. Although the above proposal is based on an MSB for explanation, the present disclosure may be equally applied to a method of fixing a freezing bit based on an LSB.

As a specific method, if the pdsch-TimeDomainAllocationList information is not provided by pdsch-ConfigCommon as an IE on a SIB, or even if it is provided, the UE on a SS to which it is not applied (the UE to which Proposal 2 is applied) may interpret information of a TDRA field using tables defined in the section 5.1.2.1.1 of the TS38.214 standard. In this case, a bit as a freezing target may be defined/configured to include M LSB bits, and the UE may expect only a part of a row index on a table expressing a TDRA. For example, if M bits are frozen with a value of 1, the UE may expect only an index corresponding to a multiple of $2^M$ as a possible scheduling value.

Information acquired by the UE to which Proposal 2 is applied from the TDRA field may be the same as that of a UE to which Proposal 2 is not applied. For example, the UE to which Proposal 2 is applied may reconfigure an entire TDRA field including a frozen bit and may interpret the entire TDRA field based on a TDRA table used by UEs to which Proposal 2 is not applied. In this case, even when a plurality of UEs monitoring the same DCI have different capabilities (i.e., when a UE to which Proposal 2 is applied and a UE to which Proposal 1 is not applied monitor the same DCI), the UEs may advantageously schedule to receive a PDSCH at a position on the same time domain.

(Proposal 3) Freezing of VRB-to-PRB mapping field

Proposal 3 proposes a method of freezing a VRB-to-PRB mapping field (at least some bits). Proposal in Proposal 3 may also be used with at least one of Proposal 1, 2, or 4.

As a detailed example, Proposal 3 may be a method of freezing an entire VRB-to-PRB field of a size of 1 bit included in DCI format 1_0. In this case, whether to apply freezing may be determined according to the standard or may also be a value designed through higher layer signaling such as a SIB.

As a detailed method, 1 bit configuring a VRB-to-PRB field may always indicate a value of 0 when Proposal 3 is applied. In this case, a UE to which Proposal 3 is applied may expect to always apply VRB-to-PRB mapping of a non-interleaved method. This may obtain an effect of lowering a code rate of a PDCCH and simultaneously reducing complexity and power consumption for performing an interleaving operation, and thus may be an advantageous method for an NR REDCAP UE that requires low complexity of a UE.

Alternatively, as a specific method, when Proposal 3 is applied, 1 bit configuring a VRB-to-PRB field may be define to comply a value indicated by higher layer signaling such as a SIB. In this case, a UE to which Proposal 3 is applied may expect to apply VRB-to-PRB mapping of a non-interleaved method when configured with a receiving value of 0 via higher layer signaling, and in contrast, the UE may expect to apply VRB-to-PRB mapping of an interleaved method when configured with a freezing value of 1. If such information is not configured on a SIB, the UE may determine to assume a freezing value to be 0 using a default operation. This may have an advantage of obtaining an effect of lowering a code rate of a PDCCH and simultaneously activating the interleaving method if necessary by the BS to obtain a gain.

Information acquired by the UE to which Proposal 3 is applied from the VRB-to-PRB field may be the same as that of a UE to which Proposal 3 is not applied. For example, the UE to which Proposal 3 is applied may reconfigure an entire VRB-to-PRB field including a frozen bit and may interpret the entire VRB-to-PRB field based on a VRB-to-PRB table used by UEs to which Proposal 3 is not applied. In this case, even when a plurality of UEs monitoring the same DCI have different capabilities (i.e., when a UE to which Proposal 3 is applied and a UE to which Proposal 3 is not applied monitor the same DCI), the UEs may advantageously schedule to receive a PDSCH to which the same VRB-to-PRB mapping method is applied.

(Proposal 4) Freezing of Redundancy version field

As in Proposal 4, a method of freezing all or some bits of the redundancy version field is proposed. The proposal in Proposal 4 may be used with at least one of Proposal 1 to Proposal 3.

As a detailed example, Proposal 4 may be a method of freezing M bits of the Redundancy version field of a size of 2 bits included in DCI format 1_0. In this case, the size and position of M bits to which freezing is applied may be values determined according to the standard or may also be a value designed through higher layer signaling such as a SIB

As a detailed example, when Proposal 4 is applied and 1 bit of the Redundancy version field is frozen, LSB 1 bit may be defined/configured to be frozen. For example, when LSB 1 bit is frozen to 0, a value of the redundancy version to be acquired through DCI format 1_0 by a UE to which Proposal 4 is applied may be limited to 0 and 2. This may be for the purpose of ensuring decoding capability in retransmission by taking a PDCCH code rate reduction gain of a size of 1 bit and simultaneously negotiating scheduling flexibility for two redundancy values.

As a detailed example, when Proposal 4 is applied and all 2 bits of the Redundancy version field are frozen, all bits may be frozen to a value of 0. This may be for the purpose of maximizing a code rate reduction effect of a PDCCH according to Proposal 4 and may simultaneously be for the purpose of fixing a value of a redundancy version for ensuring generally good decoding capability.

Information acquired by the UE to which Proposal 4 is applied from the Redundancy version field may be the same as that of a UE to which Proposal 4 is not applied. For example, the UE to which Proposal 4 is applied may reconfigure an entire Redundancy version field including a frozen bit and may interpret the entire Redundancy version field based on a Redundancy version table used by UEs to which Proposal 4 is not applied. In this case, even when a plurality of UEs monitoring the same DCI have different capabilities (i.e., when a UE to which Proposal 4 is applied and a UE to which Proposal 4 is not applied monitor the same DCI), the UEs may advantageously schedule to receive a PDSCH to which the same Redundancy version value is applied.

In the above, when a BS freezes / fixes a specific bit, this may mean that a corresponding bit is processed as a dummy bit or nulled in a process of DCI generation (coding/bitmapping) of the BS. For example, a UE may decode the corresponding DCI with a state excluding specific bits from the DCI, and such an operation of the UE may be expected. Even if a specific bit is excluded from decoding, the UE may interpret the corresponding DCI field assuming that the corresponding bit has a preset value based on the DCI-A configuration.

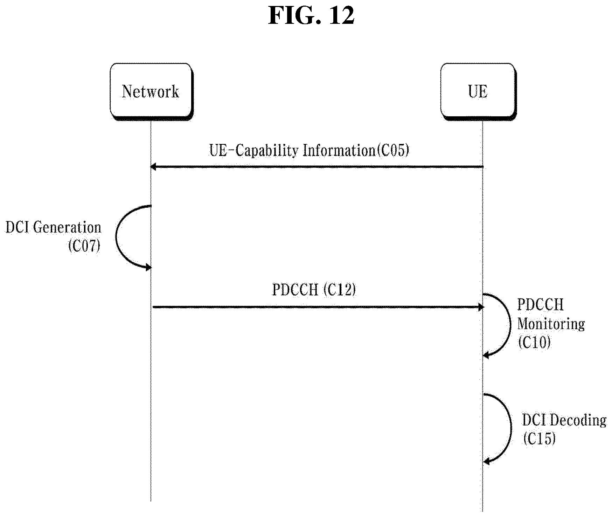

FIG. 12 is a flowchart showing a method of transmitting and receiving a signal according to an embodiment of the present disclosure. FIG. 12 illustrates an implementation of the above proposals and the present disclosure is not limited to FIG. 12.

Referring to FIG. 12, the UE may report the capability of the UE related to reception of a physical downlink control channel (PDCCH) (C05).

The BS may generate a DCI including a plurality of bits (C07). DCI generation may include determination of each bit value of the DCI and DCI encoding. The BS may encode the DCI in a state in which at least some of the plurality of bits included in the DCI are configured to fixed bit values based on capability reporting of the UE.

The BS may transmit a PDCCH carrying the DCI (C12).

The UE may monitor a PDCCH carrying a downlink control channel (DCI) (C10).

The UE may acquire a plurality of bits included in the DCI by decoding the DCI (C15). When decoding the DCI, the UE may assume that a part of the plurality of bits included in the DCI are encoded to a fixed value based on the reported capability of the UE and may acquire the plurality of bits included in the DCI.

The part of the bits encoded to the fixed value may be determined based on the capability of the UE. The DCI may be decoded based on a polar code. The part of the bits assumed to be encoded to the fixed value may be frozen bits in a polar code.

The reported capability of the UE may be related to DCI bit freezing.

The UE may assume that 'M' bits of total 'K' bits included I a specific field of the DCI are encoded to a fixed value and may perform decoding on 'K-M' bits, and 'K' refers to a size of the specific field, and 'M' refers to an integer greater than 0 and equal to or less than 'K' and may be determined based on the reported capability of the UE.

The specific field may include at least one of a frequency domain resource allocation (FDRA) field, a time domain resource allocation (TDRA) field, a redundancy version (RV) field, or a virtual resource block (VRB)-to-physical resource block (PRB) field.

In the case of the FDRA field, a binary value of the 'M' bits may be determined based on the maximum physical resource block (PRB) to be scheduled.

Although not limited thereto, various descriptions, functions, procedures, proposals, methods and/or operational flowcharts of the present disclosure may be applied in various fields requiring wireless communication/connection (e.g., 5G) between devices.

Hereinafter, a detailed example will be described with reference to the drawings. In the following drawings/description, the same reference numerals may represent the same or corresponding hardware blocks, software blocks, or functional blocks unless otherwise specified.

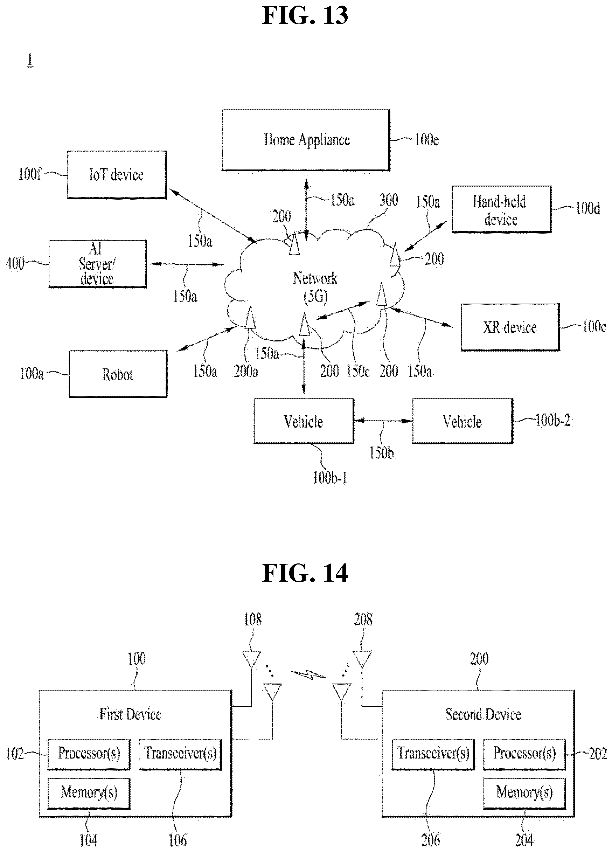

FIG. 13 illustrates a communication system 1 applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

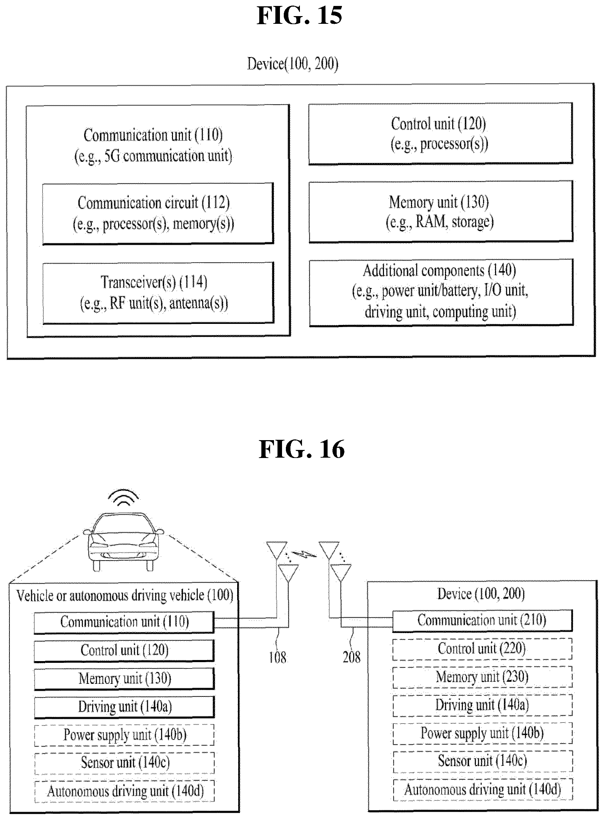

FIG. 15 illustrates another example of a wireless device applied to the present disclosure. The wireless device may be implemented in various forms according to a use-case/service (refer to FIG. 13).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

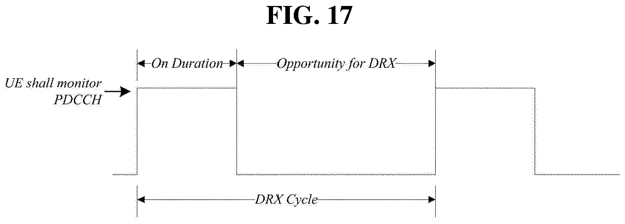

FIG. 17 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC INACTIVE state, and an RRC CONNECTED state. The UE performs DRX to receive a paging signal discontinuously in the RRC_IDLE state and the RRC INACTIVE state. DRX in the RRC_CONNECTED state (RRC_CONNECTED DRX) will be described below.

Referring to FIG. 17, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 5]

| | Type of signals | UE procedure |
|---|---|---|
| 1st step | RRC signalling (MAC-Cell GroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.

- drx-ShortCycle (optional): defines the duration of a short DRX cycle.

When any of drx-OnDurationTimer, drx-InactivityTimer, drx-HARQ-RTT-TimerDL, and drx-HARQ-RTT-Timer-DL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of receiving a signal by a user equipment (UE) in a wireless communication system, the method comprising:

   reporting capability of the UE related to reception of a physical downlink control channel (PDCCH);
   receiving a PDCCH carrying a downlink control channel (DCI); and
   decoding the DCI to acquire a plurality of bits included in the DCI,
   wherein, in the decoding of the DCI, the UE assumes that a part of the plurality of bits included in the DCI are encoded to a fixed value based on the reported capability of the UE, and acquires the plurality of bits included in the DCI.

2. The method of claim 1, wherein the part of the bits encoded to the fixed value are determined based on the capability of the UE.

3. The method of claim 1, wherein:

   the decoding of the DCI is performed based on a polar code; and
   the part of the bits assumed to be encoded to the fixed value are frozen bits in a polar code.

4. The method of claim 1, wherein the reported capability of the UE is related to DCI bit freezing.

5. The method of claim 1, wherein:

   the UE assumes that 'M' bits of total 'K' bits included in a specific field of the DCI are encoded to a fixed value and performs decoding on 'K-M' bits; and
   'K' refers a size of the specific field, and 'M' is an integer greater than 0 and equal to or less than 'K' and is determined based on the reported capability of the UE.

6. The method of claim 5, wherein the specific field includes at least one of a frequency domain resource allocation (FDRA) field, a time domain resource allocation (TDRA) field, a redundancy version (RV) field, or a virtual resource block (VRB)-to-physical resource block (PRB) field.

7. The method of claim 6, wherein, in a case of the FDRA field, a binary value of the 'M' bits is determined based on a maximum physical resource block (PRB) to be scheduled.

8. A processor-readable recording medium having recorded thereon a program for executing the method of claim 1.

9. A device for wireless communication, the device comprising:

a memory configured to store instructions; and
a processor configured to perform operations by executing the instructions,
wherein the operations of the processor includes:

reporting capability of the device related to reception of a physical downlink control channel (PDCCH);
receiving a PDCCH carrying a downlink control channel (DCI); and
decoding the DCI to acquire a plurality of bits included in the DCI, wherein, in the decoding of the DCI, the processor assumes that a part of the plurality of bits included in the DCI are encoded to a fixed value based on the reported capability of the UE, and acquires the plurality of bits included in the DCI.

10. The device of claim 9, wherein the device is an application specific integrated circuit (ASIC) or a digital signal processing device.

11. The device of claim 9, wherein the device is a user equipment (UE) operating in a wireless communication system based on a 3rd generation partnership project (3GPP).

12. A method of transmitting a signal by a base station (BS) in a wireless communication system, the method comprising:

receiving a report of capability of the UE related to reception of a physical downlink control channel (PDCCH) from a user equipment (UE);
encoding a downlink control channel (DCI) including a plurality of bits; and
transmitting a PDCCH carrying the DCI,
wherein the BS encodes the DCI in a state in which at least part of the plurality of bits included in the DCI are configured to fixed bit values based on the report of the capability of the UE.

13. The method of claim 12, wherein:

the encoding of the DCI is performed based on a polar code; and
the at least part of the bits configured to the fixed bit values among the plurality of bits are frozen bits in a polar code.

14. A device for wireless communication, the device comprising:

a memory configured to store instructions; and
a processor configured to perform operations by executing the instructions,
wherein the operations of the processor includes:

receiving a report of capability of the UE related to reception of a physical downlink control channel (PDCCH) from a user equipment (UE);
encoding a downlink control channel (DCI) including a plurality of bits; and
transmitting a PDCCH carrying the DCI,
wherein the processor encodes the DCI in a state in which at least part of the plurality of bits included in the DCI are configured to fixed bit values based on the report of the capability of the UE.

# FIG. 1

| Initial Cell<br>Search | System<br>Information<br>Reception | Random Access Procedure | General DL/UL Tx/Rx<br>S18 |
|---|---|---|---|

| PSS/SSS &<br>[DLRS] &<br>PBCH | PDCCH/<br>PDSCH<br>(BCCH) | PRACH | PDCCH/<br>PDSCH | PRACH | PDCCH/<br>PDSCH | PDCCH/<br>PDSCH | PUSCH/<br>PUCCH |
|---|---|---|---|---|---|---|---|

S11     S12     S13  S14    S15   S16    S17

• DL/UL ACK/NACK
• UE CQI/PMI/Rank Report
  using PUSCH and PUCCH

# FIG. 2

| | One Frame (10ms) | |
|---|---|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

**15KHz** — Slot (14 symbols) — 1ms

**30KHz** — Slot 0 (14 symbols) | Slot 1 — 500us

**60KHz** — Slot 0 (14 symbols) | Slot 1 | Slot 2 | Slot 3 — 250us

**120KHz** — Slot 0 (14 symbols) | Slot 1 | Slot 2 | Slot 3 | Slot 4 | Slot 5 | Slot 6 | Slot 7 — 125us

# FIG. 3

Resource grid

# FIG. 4

# FIG. 5

# FIG. 6

Non - interleaved CCE - to - REG mapping

# FIG. 7

# FIG. 8

# FIG. 9

# FIG. 10

```
┌─────────────────────────────────┐
│    Transmission of Configuration │ ⟋ FC101
│  Information for DCI-related operation │
└─────────────────────────────────┘
                 │
                 ▼
┌─────────────────────────────────┐
│          DCI Encoding            │ ⟋ FC102
└─────────────────────────────────┘
                 │
                 ▼
┌─────────────────────────────────┐
│        PDCCH Transmission        │ ⟋ FC103
└─────────────────────────────────┘
                 │
                 ▼
┌─────────────────────────────────┐
│        PDSCH Transmission        │ ⟋ FC104
└─────────────────────────────────┘
```

# FIG. 11

```
┌─────────────────────────────────┐  FC201
│   Reception of Configuration     │
│ Information for DCI-related operation │
└─────────────────────────────────┘
              │
              ▼
┌─────────────────────────────────┐  FC202
│        PDCCH Reception           │
└─────────────────────────────────┘
              │
              ▼
┌─────────────────────────────────┐  FC203
│         DCI Decoding             │
└─────────────────────────────────┘
              │
              ▼
┌─────────────────────────────────┐  FC204
│        PDSCH Reception           │
└─────────────────────────────────┘
```

# FIG. 12

# FIG. 13

# FIG. 14

# FIG. 15

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 16

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

# FIG. 17

UE shall monitor
PDCCH

←On Duration→ ←────Opportunity for DRX────→

←────────────DRX Cycle────────────→

## INTERNATIONAL SEARCH REPORT

| International application No. |
|---|
| **PCT/KR2021/014427** |

**A.    CLASSIFICATION OF SUBJECT MATTER**

**H04L 5/00**(2006.01)i; **H04L 1/00**(2006.01)i; **H04W 72/12**(2009.01)i; **H04W 72/04**(2009.01)i

According to International Patent Classification (IPC) or to both national classification and IPC

**B.    FIELDS SEARCHED**

Minimum documentation searched (classification system followed by classification symbols)

H04L 5/00(2006.01); H04B 7/26(2006.01); H04J 11/00(2006.01); H04L 1/00(2006.01); H04W 28/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DCI, 사이즈(size), 성능(capability), 고정(fixed)

**C.    DOCUMENTS CONSIDERED TO BE RELEVANT**

| Category* | Citation of document, with indication, where appropriate, of the relevant passages | Relevant to claim No. |
|---|---|---|
| Y | WO 2020-010191 A1 (QUALCOMM INCORPORATED) 09 January 2020 (2020-01-09)<br>See paragraphs [0065]-[0079]; and claims 1-42. | 1-6,8-14 |
| A | | 7 |
| Y | US 2019-0312679 A1 (NOKIA TECHNOLOGIES OY) 10 October 2019 (2019-10-10)<br>See paragraphs [0029] and [0068]; and claims 7-10. | 1-6,8-14 |
| Y | ERICSSON. On NR operations in 52.6 to 70 GHz. R1-2005920, 3GPP TSG RAN WG1 Meeting #102-e.<br>08 August 2020.<br>See section 4.4. | 6 |
| A | KR 10-1769371 B1 (LG ELECTRONICS INC.) 30 August 2017 (2017-08-30)<br>See paragraphs [0013]-[0021]; and claims 1, 3 and 6-7. | 1-14 |
| A | CN 106856613 B (HUAWEI TECHNOLOGIES CO., LTD.) 14 April 2020 (2020-04-14)<br>See paragraphs [0004]-[0030]; and claims 1-12. | 1-14 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **04 February 2022** | **04 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/014427**

| Patent document cited in search report | | | Publication date (day/month/year) | Patent family member(s) | | | Publication date (day/month/year) |
|---|---|---|---|---|---|---|---|
| WO | 2020-010191 | A1 | 09 January 2020 | CN | 112438030 | A | 02 March 2021 |
| | | | | EP | 3818657 | A1 | 12 May 2021 |
| | | | | KR | 10-2021-0027293 | A | 10 March 2021 |
| | | | | SG | 11202011606 | A | 25 February 2021 |
| | | | | TW | 202007214 | A | 01 February 2020 |
| | | | | US | 1071100 | B2 | 20 July 2021 |
| | | | | US | 2020-0015202 | A1 | 09 January 2020 |
| US | 2019-0312679 | A1 | 10 October 2019 | CN | 110249558 | A | 17 September 2019 |
| | | | | EP | 3556030 | A1 | 23 October 2019 |
| | | | | US | 11146358 | B2 | 12 October 2021 |
| | | | | WO | 2018-108247 | A1 | 21 June 2018 |
| KR | 10-1769371 | B1 | 30 August 2017 | CN | 102714567 | A | 03 October 2012 |
| | | | | CN | 102714567 | B | 22 April 2015 |
| | | | | EP | 2525513 | A2 | 21 November 2012 |
| | | | | EP | 2525513 | B1 | 31 May 2017 |
| | | | | US | 2013-0010714 | A1 | 10 January 2013 |
| | | | | US | 9031016 | B2 | 12 May 2015 |
| | | | | WO | 2011-084026 | A2 | 14 July 2011 |
| | | | | WO | 2011-084026 | A3 | 01 December 2011 |
| CN | 106856613 | B | 14 April 2020 | CN | 106856613 | A | 16 June 2017 |

Form PCT/ISA/210 (patent family annex) (July 2019)